# EUROPÄISCHE PATENTSCHRIFT

(11) **EP 0 728 297 B1**
(45) Veröffentlichungstag und Bekanntmachung des Hinweises auf die Patenterteilung: **12.08.1998**
(21) Anmeldenummer: 95900058.9
(22) Anmeldetag: 03.11.1994
(51) Int. Cl.: G01D 3/02, G01D 18/00

(54) **SCHALTUNGSANORDNUNG ZUR BEEINFLUSSUNG VON SIGNALEN**
CIRCUIT ASSEMBLY FOR THE CONTROL OF SIGNALS
MONTAGE POUR LE CONTROLE DE SIGNAUX

(30) Priorität: 12.11.1993 DE 4338709
(43) Veröffentlichungstag der Anmeldung: 28.08.1996
(73) Patentinhaber: ROBERT BOSCH GMBH, 70442 Stuttgart (DE)
(72) Erfinder: KERN, Robert, D-77887 Sasbachwalden (DE)
(86) Internationale Anmeldenummer: DE9401294
(87) Internationale Veröffentlichungsnummer: WO9513522

(56) Entgegenhaltungen:
- PATENT ABSTRACTS OF JAPAN vol. 13, no. 103 (E-725) 10. März 1989 & JP,A,63 274 398 (MITSUBISHI ELECTRIC CORP) 11. November 1988
- ADVANCES IN INSTRUMENTATION, Bd.40, Nr.2, 21. Oktober 1985, RESEARCH TRIANGLE PARK, NC ,USA Seiten 1153 - 1165 C. JOHN EASTON 'Pressure Measurement using "Smart" Transducers'

## Beschreibung

Die Erfindung geht aus von einer Schaltungsanordnung zur Beeinflussung von Signalen nach der Gattung des unabhängigen Anspruchs. Aus der JP-A-63-274 398 ist eine elektronische Motorsteuerung bekannt, die eine Ansteuerung einer Endstufe mit einem impulsbreitenmodulierten Signal vorsieht, das in Abhängigkeit von dem durch den Motor fließenden Strom sowie in Abhängigkeit von der Drehzahl festgelegt ist. Die Endstufe und der Motor sind in einem ersten Schaltungsteil enthalten, in dem der Motorstrom als zu verarbeitendes Signal auftritt. Ein zweiter Schaltungsteil enthält eine Signalaufbereitung sowie eine Vorrichtung zur Korrektur des Motorstromsignals. Ein Offsetfehler bei der Erfassung des Motorstroms wird dadurch korrigiert, daß jedes Mal dann, wenn der Motorstrom tatsächlich zu Null wird, der von Null abweichende gemessene Motorstromwert in einem Speicher hinterlegt und später zur Korrektur verwendet wird. Die vorbekannte Schaltungsanordnung enthält zusätzliche Schaltmittel, die eine Feststellung ermöglichen, ob der Motorstrom tatsächlich gerade den Wert Null aufweist. Diese Schaltmittel sind nicht näher spezifiziert.

Aus der EP-A-263 305 ist eine Schaltungsanordung bekannt, bei der die von Sensoren erfaßten Werte Verstärkern zugeführt werden, deren Verstärkungsfaktoren und Offsetfehler korrigiert werden.

Die entsprechenden Korrektursignale werden in einem Korrektursignalpfad von den Ausgangssignalen der Sensoren und gegebenenfalls weiterer Sensoren, die Umweltparameter erfassen, abgeleitet. Die Ausgangssignale aller Sensoren werden über einen im Korrektursignalpfad angeordneten Multiplexer einem Analog/Digital-Wandler zugeführt, dessen digitales Ausgangssignal zumindest einen Teil des Adressbereichs eines Speichers bildet. Die an bestimmten Speicherstellen hinterlegten digitalen Korrekturwerte werden ausgelesen und über einen Digital/Analog-Wandler wieder in Analogsignale umgesetzt, die über einen Demultiplexer in die Korrektursignale für den Verstärkungsfaktor und für den Offset aufgeteilt werden. Die bekannte Schaltungsanordnung ermöglicht sowohl die Korrektur von Fehlern, die bei einer Kalibrierung der Schaltungsanordnung während der ersten Inbetriebnahme ermittelt werden als auch eine Korrektur von Meßsignalen in Abhängigkeit von den gerade vorliegenden Umweltbedingungen. Die im Speicher hinterlegten Korrekturwerte bleiben normalerweise während der gesamten Betriebszeit der bekannten Schaltungsanordnungen unverändert. Eine unter Umständen auftretende Langzeitdrift, insbesondere eine Langzeitdrift eines Verstärkungsfaktors oder eines Offsetfehlers eines Verstärkers, kann unter diesen Voraussetzungen nicht erkannt und nicht korrigiert werden.

Der Erfindung liegt die Aufgabe zugrunde, eine Schaltungsanordnung zur Beeinflussung von Signalen anzugeben, die mit einfachsten Mitteln eine Korrektur eines Signals ermöglicht.

Die Aufgabe wird durch die im Hauptanspruch angegebenen Merkmale gelöst.

### Vorteile der Erfindung

Die erfindungsgemäße Schaltungsanordnung zur Beeinflussung von Signalen weist den Vorteil auf, daß mit geringem schaltungstechnischen Aufwand eine Langzeitdrift bei der Verarbeitung wenigstens eines Signals korrigierbar ist. Insbesondere ist ein Offsetfehler eines Verstärkers korrigierbar. Die erfindungsgemäße Schaltungsanordnung ist in zwei Schaltungsteile unterteilt. Im zweiten Schaltungsteil ist eine Einschaltverzögerung vorgesehen, die den ersten Schaltungsteil für eine vorgegebene Zeit nach der Inbetriebnahme der beiden Schaltungsteile im abgeschalteten Zustand hält. Während der von der Einschaltverzögerung vorgegebenen Zeit wird in einem Speicher ein an einem Ausgang einer Signalaufbereitung auftretender Ruhepegel hinterlegt, der nach dem Ablauf der vorgegebenen Zeit, wenn der erste Schaltungsteil in Betrieb gesetzt wird, als Korrekturwert zum Erhalt des richtigen Signals verwendet wird.

Vorteilhafte Weiterbildungen und Ausgestaltungen der erfindungsgemäßen Schaltungsanordnung zur Beeinflussung von Signalen ergeben sich aus den abhängigen Ansprüchen.

Eine vorteilhafte Ausgestaltung sieht vor, daß die Signalaufbereitung einen Operationsverstärker enthält, dessen Offsetfehler bei jeder neuen Inbetriebnahme der Schaltungsanordnung ermittelt wird. Besonders vorteilhaft ist es, daß ein relativ preiswerter Operationsverstärker eingesetzt werden kann, der gegebenenfalls einen vergleichsweise hohen Offsetfehler aufweist.

Eine vorteilhafte Ausgestaltung sieht vor, daß der im Speicher hinterlegte Korrekturwert nach Ablauf der von der Einschaltverzögerung vorgegebenen Zeit einem Addierer zugeleitet wird, der den Korrekturwert vorzeichenrichtig zum aufbereiteten Signal am Ausgang der Signalaufbereitung addiert.

Eine vorteilhafte Weiterbildung der erfindungsgemäßen Schaltungsanordnung sieht vor, daß die im zweiten Schaltungsteil angeordnete Einschaltverzögerung mit eine Ansteuerung zusammenwirkt, die für ein im ersten Schaltungsteil angeordnetes Halbleiterbauelement vorgesehen ist, das eine Schaltfunktion erfüllt. Vorzugsweise ist das Halbleiterbauelement als Schaltelement in einem Schaltnetzteil vorgesehen. Das Halten des ersten Schaltungsteils im abgeschalteten Zustand während der von der Einschaltverzögerung vorgegebenen Zeit ist mit dieser Maßnahme ohne zusätzliche Mittel möglich.

Die erfindungsgemäße Schaltungsanordnung zur Beeinflussung von Signalen ist insbesondere zur Aufbereitung eines von einem Sensor erfaßten Meßwerts geeignet. Als Meßwert kann beispielsweise ein durch einen elektrischen Verbraucher fließender Strom vorgesehen sein, der im einfachsten Fall mit einem Meßwiderstand erfaßt wird, wobei ein Operationsverstärker zum Verstärken des am Meßwiderstand auftretenden Spannungsabfalls eingesetzt ist.

Die erfindungsgemäße Schaltungsanordnung ist insbesondere geeignet zur Verwendung im Rahmen einer Leistungsregelung für einen elektrischen Verbraucher, bei der eine multiplikative Verknüpfung von Meßwerten auftritt, die ohne Korrektur von beispielsweise eines Offsetfehlers bei der Stromerfassung eine erhöhte Abweichung zwischen Leistungssoll- und Leistungsistwert aufweisen würde. Als Verbraucher, dessen Leistung zu regeln ist, kann beispielsweise eine Hochdruckgasentladungslampe vorgesehen sein, die vorzugsweise in einem Kraftfahrzeug angeordnet ist. Bei dieser Anwendung machen sich geringere Kosten für die Signalaufbereitung in einer Serienproduktion besonders vorteilhaft bemerkbar.

Weitere vorteilhafte Weiterbildungen und Ausgestaltungen der erfindungsgemäßen Schaltungsanordnung ergeben sich aus weiteren abhängigen Ansprüchen in Verbindung mit der folgenden Beschreibung.

### Zeichnung

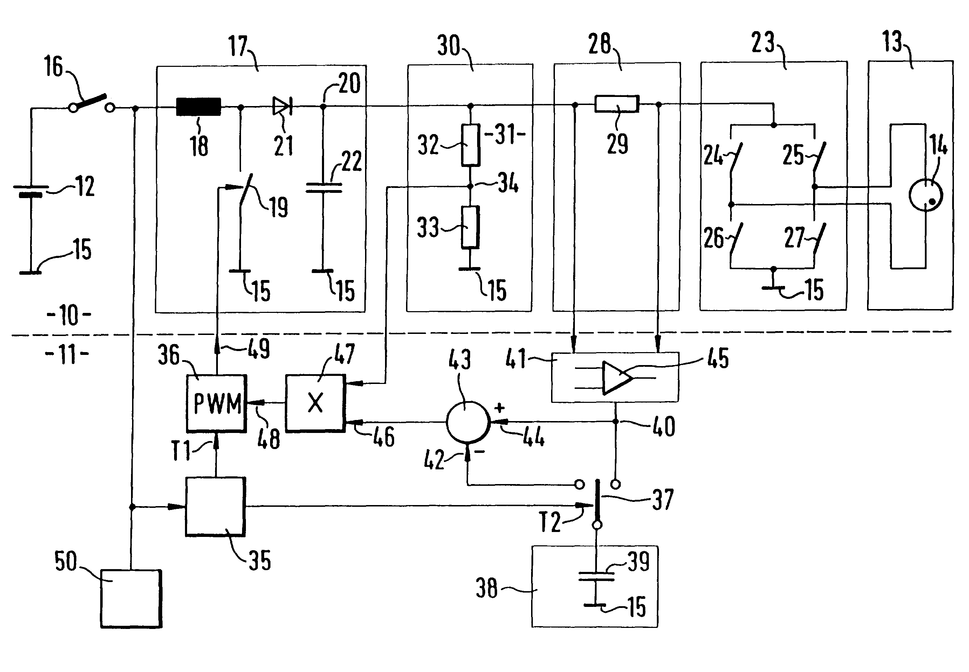

Die Figur zeigt ein Blockschaltbild einer Schaltungsanordnung zur Beeinflussung von Signalen, die einen ersten und einen zweiten Schaltungsteil enthält.

Die Figur zeigt ein erstes Schaltungsteil 10 und ein zweites Schaltungsteil 11, die strichliniert voneinander abgetrennt gezeichnet sind. Im ersten Schaltungsteil 10 ist eine Energiequelle 12 angeordnet, die zur Energieversorgung eines elektrischen Verbrauchers 13 vorgesehen ist, der im gezeigten Ausführungsbeispiel als Gasentladungslampe 14 ausgebildet ist.

Die Energiequelle 12, die einseitig an einer Masse 15 liegt, ist über einen Einschalter 16 mit einer getakteten Stromversorgung 17 verbindbar. Die getaktete Stromversorgung 17 ist im gezeigten Ausführungsbeispiel als Aufwärts-Drosselwandler ausgebildet, der ein induktives Element 18, ein nach Masse 15 schaltendes Schaltelement 19, eine zu einem Ausgang 20 der getakteten Stromversorgung 17 führende Diode 21 sowie einen zwischen dem Ausgang 20 und Masse 15 liegenden Glättungskondensator 22 enthält.

Der Ausgang 20 der getakteten Stromversorgung 17 ist mit einer Brückenschaltung 23 verbunden, in deren Diagonale die Gasentladungslampe 14 liegt. Die Brückenschaltung 23 enthält vier Brückenschaltelemente 24, 25, 26, 27, deren Ansteuerung in der Figur nicht näher angegeben ist.

Zur Erfassung eines durch die Gasentladungslampe 14 fließenden Stroms ist ein Stromsensor 28 vorgesehen, der im gezeigten Ausführungsbeispiel einen Meßwiderstand 29 enthält. Zur Erfassung einer an der Gasentladungslampe 14 auftretenden Spannung ist ein Spannungssensor 30 vorgesehen, der einen Spannungsteiler 31 enthält, der mit zwei in Reihe geschalteten Widerständen 32, 33 realisiert ist. An einem Mittenabgriff 34 des Spannungsteilers 31 tritt der Spannungsmeßwert auf.

Der Einschalter 16 verbindet die Energiequelle 12 auch mit einer im zweiten Schaltungsteil 11 angeordneten Energieversorgung 50 und einer Einschaltverzögerung 35. Die Einschaltverzögerung 35 gibt ein erstes Schaltsignal T1 an eine Ansteuerung 36 und ein zweites Schaltsignal T2 an einen Umschalter 37 ab.

Der Umschalter 37 verbindet einen Speicher 38, der im gezeigten Ausführungsbeispiel als ein Speicherkondensator 39 ausgebildet ist, entweder mit einem Ausgang 40 einer Signalaufbereitung 41 oder mit einem Minus-Eingang 42 eines Addierers 43. Ein Plus-Eingang 44 des Addierers 43 ist mit dem Ausgang 40 der Signalaufbereitung 41 verbunden.

Die Signalaufbereitung 41 enthält wenigstens einen Operationsverstärker 45, dem das vom Stromsensor 28 abgegebene Signal zugeführt wird.

Ein Ausgangssignal 46 des Addierers 43 ist einem Multiplizierer 47 zugeleitet, der das Ausgangssignal 46 mit dem am Mittenabgriff 34 des Spannungsteilers 31 liegenden Spannungsmeßwert multipliziert und ein Ergebnis 48 zur Ansteuerung 36 weiterleitet. Die Ansteuerung 36 erzeugt ein Steuersignal 49 zum Ansteuern des Schaltelements 19.

Die erfindungsgemäße Schaltungsanordnung arbeitet folgendermaßen:

Nach jeder Inbetriebnahme des elektrischen Verbrauchers 13 durch Betätigen des Einschalters 16 wird der erste Schaltungsteil 10 für eine von der Einschaltverzögerung 35 vorgegebene Zeit T noch im abgeschalteten Zustand gehalten. Der zweite Schaltungsteil 11 wird nach dem Betätigen des Einschalters 16 unmittelbar mit Energie versorgt. Gegebenenfalls ist die Energieversorgung 50 vorgesehen, die beispielsweise einen Spannungsregler enthalten kann.

Die Einschaltverzögerung 35 gibt mit dem ersten Schaltsignal T1 die vorgegebene Zeit T über die Ansteuerung 36 und das von der Ansteuerung 36 abgegebene Steuersignal 49 weiter an das Schaltelement 19, das in der getakteten Stromversorgung 17 angeordnet ist. Das Schaltelement 19 wird vorzugsweise während der vorgegebenen Zeit T im geöffneten Zustand gehalten. Während der von der Einschaltverzögerung 35 vorgegebenen Zeit T wird der Umschalter 37 mit dem zweiten Schaltsignal T2 in diejenige Position geschaltet, bei der der Umschalter 37 den Speicher 38 mit dem Ausgang 40 der Signalaufbereitung 41 verbindet.

Die beiden von der Einschaltverzögerung 35 abgegebenen Schaltsignale T1, T2 sind im gezeigten Ausführungsbeispiel voneinander getrennt und können daher unterschiedliche Pegel und Polaritäten aufweisen. In einer anderen Ausgestaltung können die beiden Schaltsignale T1, T2 identisch sein.

In einer einfachen Ausgestaltung ist der Speicher 38 mit dem Speicherkondensator 39 realisierbar, der einen analogen Wert ohne weitere Maßnahmen speichern kann. In einer anderen Ausgestaltung ist es möglich, den Speicher 38 als digitalen Speicher zu realisieren. In dieser Ausgestaltung sind vorzugsweise weitere Komponenten, wie beispielsweise der Umschalter 37, der Addierer 43, der Multiplizierer 47, die Einschaltverzögerung 35 sowie die Ansteuerung 36 in einem Mikroprozessorsystem im Rahmen eines Programmablaufs realisiert.

Während der von der Einschaltverzögerung vorgegebenen Zeit T wird im Speicher 38 ein am Ausgang 40 der Signalaufbereitung 41 auftretender Ruhepegel hinterlegt. Der Ruhepegel ist beispielsweise ein Offsetfehler, der in Operationsverstärkern 45 auftreten kann, die in der Signalaufbereitung 41 enthalten sind. In der Signalaufbereitung 41 ist vorzugsweise ein Operationsverstärker 45 vorgesehen, der das vom Stromsensor 28 abgegebene Signal auf einen höheren Pegel verstärkt. Verwendbar ist ein relativ preiswerter Operationsverstärker 45, bei dem gegebenenfalls in Kauf genommen werden muß, daß ein hoher Offsetfehler auftritt, der dem am Ausgang 40 auftretenden Ruhepegel während der von der Einschaltverzögerung 35 vorgegebenen Zeit T entspricht.

Am Ausgang 40 der Signalaufbereitung 41 tritt während der von der Einschaltverzögerung 35 vorgegebenen Zeit T der Ruhepegel aus, weil während dieser Zeitspanne noch kein Strom durch den elektrischen Verbraucher 13 fließt, der am Meßwiderstand 29 des Stromsensors 28 einen Spannungsabfall hervorrufen könnte. Nach Ablauf der vorgegebenen Zeit T geht der erste Schaltungsteil 10 in den Betriebszustand über, durch eine entsprechende Ausgabe des Steuersignals 49, das beispielsweise ein impulsbreitenmoduliertes Signal zum Betätigen des Schaltelements 19 ist. Das Steuersignal 49 setzt die getaktete Stromversorgung 19 in Betrieb, deren Funktion hier nicht im einzelnen erläutert wird. Am Ausgang der getakteten Stromversorgung 17 liegt eine Gleichspannung an, die vom Glättungskondensator 22 während der Kurzschlußphase des Schaltelements 19 gespeichert wird. Gleichzeitig mit der getakteten Stromversorgung 17 geht eine nicht näher gezeigte Steuerschaltung zum Betätigen der Brückenschaltelemente 24 - 37 der Brückenschaltung 23 in Betrieb. Die Brückenschaltung 23 hat die Aufgabe, den elektrischen Verbraucher 13 mit einer vorgegebenen Umschaltfrequenz zwischen Masse 15 und den Ausgang 20 der getakteten Stromversorgung 17 zu schalten. Sinn dieser Maßnahme ist die Eliminierung einer Gleichstromkomponente, die bestimmte Verbraucher wie beispielsweise die Gasentladungslampe 14, zerstören würde.

Nach dem Einschalten des elektrischen Verbrauchers 13, wobei im gezeigten Ausführungsbeispiel erforderliche Einrichtungen zum Zünden der Gasentladungslampe 14 nicht gezeigt sind, fließt ein Strom durch den elektrischen Verbraucher 13, der vom Stromsensor 28 erfaßt wird. Der Stromsensor 28, der beispielsweise ein niederohmiger Meßwiderstand 29 ist, gibt an die Signalaufbereitung 41 ein Signal als Maß für den fließenden Strom ab. Die Signalaufbereitung 41 hat die Aufgabe, dieses Signal auf leicht handhabbare Werte zu verstärken. In einer einfachen Realisierung der Signalaufbereitung 41 ist lediglich ein Operationsverstärker 45 erforderlich, der als Differenzverstärker geschaltet ist zur Verstärkung des am Meßwiderstand 29 auftretenden Spannungsabfalls. Am Ausgang 40 der Signalaufbereitung 41 tritt das aufbereitete Signal auf, dem der Offsetfehler des Operationsverstärkers 45 überlagert ist. Zum Erhalt des richtigen Meßwerts ist der Addierer 43 vorgesehen, dessen Plus-Eingang 44 mit dem Ausgang 40 und dessen Minus-Eingang 42 mit dem Umschalter 37 verbunden ist. Nach Ablauf der von der Einschaltverzögerung vorgegebenen Zeit T ist der Umschalter 37 in eine Stellung gebracht, bei der der Speicher 38 mit dem Minus-Eingang 42 des Addierers 43 verbunden ist. Der Addierer 43 addiert vorzeichenrichtig zum aufbereiteten Signal den im Speicher 38 enthaltenen Korrekturwert und gibt den richtigen Meßwert als Ausgangssignal 46 aus. Der Offsetfehler, der als additiver Fehler bei der Erfassung eines Meßwerts auftritt, wird bei jeder erneuten Inbetriebnahme der Schaltungsanordnung 10, 11 durch Betätigen des Einschalters 16 neu erfaßt, im Speicher 38 hinterlegt und im anschließenden Betrieb des ersten Schaltungsteils 10 zum Erhalt des richtigen Meßwerts verwendet.

Anstelle der gezeigten Anordnung des Addierers 43 nach der Signalaufbereitung 41 ist es ohne weiteres möglich, den Addierer vor der Signalaufbereitung 41 vorzusehen, wenn ein gegebenenfalls vom Wert Eins unterschiedlicher Verstärkungsfaktor der Signalaufbereitung 41 berücksichtigt wird.

Im gezeigten Ausführungsbeispiel wird das Ausgangssignal 46 weiterverwendet zur Realisierung einer Regelung der im elektrischen Verbraucher 13 umgesetzten elektrischen Leistung. Die Leistung wird durch Multiplikation des dem im Verbraucher 13 fließenden Strom entsprechenden Ausgangssignals 46 mit dem am Mittenabgriff 34 des Spannungsteilers 31 abgreifbaren Spannungsmeßwerts, der ein Maß für die am elektrischen Verbraucher 13 liegende Spannung ist, erhalten. Sofern anstelle des mit passiven Bauelementen, den beiden Widerständen 32, 33 realisierten Spannungsteilers 31 ebenfalls ein aktives Bauelement wie beispielsweise ein Operationsverstärker vorgesehen ist, so kann ohne weiteres ein weiterer Speicher 38 sowie ein weiterer Addierer 43 zur Korrektur des erfaßten und aufbereiteten Spannungsmeßwerts vorgesehen sein. Der Multiplizierer 47 leitet das ermittelte Ergebnis 48 der Ansteuerung 36 zu, die beispielsweise eine Impulsbreitenmodulation des Steuersignals 49 vornimmt. Zur Ermittlung des Verhältnisses von Impulsdauer zu Impulspause des impulsmodulierten Steuersignals 49 ist ein nicht näher gezeigter Leistungsregler in der Ansteuerung 36 enthalten, der einen Leistungssollwert, der beispielsweise aus einer hinterlegten Tabelle entnommen wird, mit dem erhaltenen Leistungsistwert vergleicht.

Eine andere Ausgestaltung sieht vor, daß der im Speicher 38 hinterlegte Korrekturwert unmittelbar auf den Operationsverstärker 45 einwirkt und dadurch eine Offsetfehlerkompensation bewirkt. Verschiedene Typen von Operationsverstärkern 45 weisen eine entsprechende Eingriffsmögichkeit auf. Der separate Addierer 43 kann entfallen. Prinzipiell aber entspricht der unmittelbare Eingriff in den Operationsverstärker 45 einer additiven Signalbeeinflussung.

Die erfindungsgemäße Schaltungsanordnung mit den beiden Schaltungsteilen 10, 11 und mit der Gasentladungslampe 14 als elektrischen Verbraucher 13 findet vorzugsweise Verwendung in einem Kraftfahrzeug, bei dem die Gasentladungslampe 14 in einem Scheinwerfer angeordnet ist. Bei dieser Anwendung ist der Operationsverstärker 45 rauhen Umgebungsbedingungen ausgesetzt, die zu einer Langzeitdrift des Offsetfehlers führen können.

## Patentansprüche

1. Schaltungsanordnung mit einem ersten Schaltungsteil (10), in dem wenigstens ein zu verarbeitendes Signal auftritt, mit einem zweiten Schaltungsteil (11), das eine Signalaufbereitung (41) sowie eine Vorrichtung (37, 38, 43) zur Korrektur des Signals enthält, mit einem in der Vorrichtung (37, 38, 43) zur Signalkorrektur enthaltenen Speicher (38), der ein an einem Ausgang (40) der Signalaufbereitung (41) auftretenden Ruhepegel speichert, wobei der gespeicherte Ruhepegel zum Korrigieren des aufbereiteten Signals vorgesehen ist, dadurch gekennzeichnet, daß im zweiten Schaltungsteil (11) eine Einschaltverzögerung (35) vorgesehen ist, die das erste Schaltungsteil (10) für die von der Einschaltverzögerung (35) vorgegebenen Zeit (T) nach der Inbetriebnahme der beiden Schaltungsteile (10, 11) im abgeschalteten Zustand hält, daß der Speicher (38) in der vorgegebenen Zeit (T) den auftretenden Ruhepegel speichert und daß die Signalkorrektur nach Ablauf der vorgegebenen Zeit (T) vorgesehen ist.

2. Schaltungsanordnung nach Anspruch 1, dadurch gekennzeichnet, daß die Signalaufbereitung (41) wenigstens einen Operationsverstärker (45) enthält.

3. Schaltungsanordnung nach Anspruch 1, dadurch gekennzeichnet, daß als Signal wenigstens eine im ersten Schaltungsteil (10) auftretende Meßgröße vorgesehen ist.

4. Schaltungsanordnung nach Anspruch 3, dadurch gekennzeichnet, daß als Meßgröße ein durch einen elektrischen Verbraucher (13) fließender Strom vorgesehen ist, der als Spannungsabfall an einem Meßwiderstand (29) auftritt.

5. Schaltungsanordnung nach Anspruch 1, dadurch gekennzeichnet, daß ein Addierer (43) vorgesehen ist, der nach Ablauf der von der Einschaltverzögerung (35) vorgegebenen Zeit (T) den im Speicher (38) enthaltenen Korrekturwert vorzeichenrichtig zum aufzubereitenden Signal addiert.

6. Schaltungsanordnung nach Anspruch 5, dadurch gekennzeichnet, daß der Addierer (43) am Ausgang (40) der Signalaufbereitung (41) angeordnet ist.

7. Schaltungsanordnung nach Anspruch 1, dadurch gekennzeichnet, daß die Einschaltverzögerung (35) mit einer Ansteuerung (36) zusammenwirkt, die ein Steuersignal (49) für ein im ersten Schaltungsteil (10) angeordnetes Schaltelement (19) abgibt.

8. Schaltungsanordnung nach Anspruch 7, dadurch gekennzeichnet, daß das Schaltelement (19) in einer getakteten Stromversorgung (17) vorgesehen ist.

9. Schaltungsanordnung nach Anspruch 4, dadurch gekennzeichnet, daß die Erfassung des durch den elektrischen Verbrauchers (13) fließenden Stroms zu einer Leistungsregelung für die im elektrischen Verbraucher (13) umgesetzte elektrische Leistung vorgesehen ist.

10. Schaltungsanordnung nach Anspruch 9, dadurch gekennzeichnet, daß als elektrischer Verbraucher (13) eine Gasentladungslampe (14) vorgesehen ist, die in einem Scheinwerfer eines Kraftfahrzeugs eingesetzt ist.

## Claims

1. Circuit arrangement having a first circuit section (10), in which at least one signal to be processed appears, having a second circuit section (11), which contains a signal conditioning arrangement (41) and also an apparatus (37, 38, 43) for correcting the signal, having a store (38), which is contained in the apparatus (37, 38, 43) for signal correction and stores a quiescent level appearing at an output (40) of the signal conditioning arrangement (41), the stored quiescent level being provided for correcting the conditioned signal, characterized in that a switch-on delay arrangement (35) is provided in the second circuit section (11) and keeps the first circuit section (10) in the switched-off state for the time (T), which is predetermined by the switch-on delay arrangement (35), after the start-up of the two circuit sections (10, 11), in that the store (38) stores the quiescent level that occurs in the predetermined time (T), and in that the signal correction is provided after the predetermined time (T) has elapsed.

2. Circuit arrangement according to Claim 1, characterized in that the signal conditioning arrangement (41) contains at least one operational amplifier (45).

3. Circuit arrangement according to Claim 1, characterized in that at least one measured quantity appearing in the first circuit section (10) is provided as the signal.

4. Circuit arrangement according to Claim 3, characterized in that a current which flows through an electrical load (13) and appears as a voltage drop across a measuring resistor (29) is provided as the measured quantity.

5. Circuit arrangement according to Claim 1, characterized in that an adder (43) is provided which, after the time (T) prdetermined by the switch-on delay arrangement (35) has elapsed, adds, in a manner that is correct in terms of the sign, the correction value contained in the store (38) to the signal to be conditioned.

6. Circuit arrangement according to Claim 5, characterized in that the adder (43) is arranged at the output (40) of the signal conditioning arrangement (41).

7. Circuit arrangement according to Claim 1, characterized in that the switch-on delay arrangement (35) interacts with a drive arrangement (36), which emits a control signal (49) for a switching element (19) arranged in the first circuit section (10).

8. Circuit arrangement according to Claim 7, characterized in that the switching element (19) is provided in a switched-mode power supply (17).

9. Circuit arrangement according to Claim 4, characterized in that the detection of the current flowing through the electrical load (13) is provided for power regulation for the electric power converted in the electrical load (13).

10. Circuit arrangement according to Claim 9, characterized in that the electrical load (13) that is provided is a gas discharge lamp (14) which is used in a headlight of a motor vehicle.

## Revendications

1. Montage comprenant une première partie (10) dans laquelle apparaît au moins un signal à traiter, une seconde partie (11) comportant un circuit de traitement de signal (41) ainsi qu'un dispositif (37, 38, 43) pour corriger le signal,
une mémoire (38) de correction de signal dans le dispositif (37, 38, 43),
cette mémoire enregistrant le niveau de repos apparaissant à la sortie (40) du circuit de traitement de signal (41), le niveau de repos enregistré étant prévu pour corriger le signal préparé,
caractérisé en ce que
- la seconde partie (11) du montage comprend un circuit de temporisation de branchement (35) qui maintient à l'état coupé la première partie (10) du montage pendant une durée (T) prédéterminée par le circuit de temporisation (35), après la mise en route des deux parties (10, 11) du montage,
- la mémoire (38) enregistre le niveau de repos apparaissant pendant la période prédéterminée (T) et,
- la correction du signal se fait après la période prédéterminée (T).

2. Montage selon la revendication 1,
caractérisé en ce que
le circuit de traitement de signal (41) comprend au moins un amplificateur opérationnel (45).

3. Montage selon la revendication 1,
caractérisé en ce que
le signal est au moins une grandeur de mesure apparaissant dans la première partie (10) du montage.

4. Montage selon la revendication 3,
caractérisé en ce que
la grandeur de mesure est le courant traversant un consommateur électrique (13), ce courant apparaissant comme chute de tension aux bornes d'une résistance de mesure (29).

5. Montage selon la revendication 1,
caractérisé par
un additionneur (43) qui, à la fin de la période (T) prédéterminée par le circuit de temporisation (35), additionne algébriquement la valeur de correction contenue dans la mémoire (38), au signal à traiter.

6. Montage selon la revendication 5,
caractérisé en ce que
l'additionneur (43) est prévu à la sortie (40) du circuit de traitement (41).

7. Montage selon la revendication 1,
caractérisé en ce que
le circuit de temporisation (35) coopère avec un circuit de commande (36) fournissant un signal de commande (49) pour un élément de commutation (19) appartenant à la première partie (10) du montage.

8. Montage selon la revendication 7,
caractérisé en ce que
l'élément de commutation (19) appartient à une alimentation de courant hachée (17).

9. Montage selon la revendication 4,
caractérisé en ce que
la détection du courant traversant le consommateur électrique (13) est prévue pour une régulation de la puissance électrique convertie par le consommateur électrique (13).

10. Montage selon la revendication 9,
caractérisé en ce que
le consommateur électrique (13) est une lampe à décharge de gaz (14) équipant un projecteur de véhicule automobile.
